# EUROPÄISCHE PATENTSCHRIFT

(11) **EP 4 532 253 B1**
(45) Veröffentlichungstag und Bekanntmachung des Hinweises auf die Patenterteilung: **28.10.2026**
(21) Anmeldenummer: 23714742.6
(22) Anmeldetag: 28.03.2023
(51) Int. Cl.: B60L 53/14, B60L 53/16, B60L 53/18, B60L 53/30

(54) **LADEVORRICHTUNG**
CHARGING DEVICE
DISPOSITIF DE CHARGEMENT

(30) Priorität: 03.06.2022 DE 102022205708
(43) Veröffentlichungstag der Anmeldung: 09.04.2025
(73) Patentinhaber: MAHLE International GmbH, 70376 Stuttgart (DE)
(72) Erfinder: EWERT, Sebastian, 70180 Stuttgart (DE); GERSTADT, Max, 70567 Stuttgart (DE); WAGNER, Michael B., 78628 Rottweil (DE)
(86) Internationale Anmeldenummer: PCT/EP2023/057941
(87) Internationale Veröffentlichungsnummer: WO 2023/232309

(56) Entgegenhaltungen:
- DE-A1- 102009 034 886
- JP-A- 2018 197 708
- US-A1- 2016 250 939
- US-A1- 2020 198 473
- US-A1- 2021 237 607

## Beschreibung

Die Erfindung betrifft eine Ladevorrichtung gemäß dem Oberbegriff des Anspruchs 1.

DE 10 2009 034886 A1 offenbart ein im Steckergehäuse angeordnetes Kodiermittel welches zwischen Pilot und Masse geschaltet ist.

US 2021/237607 A1 offenbart eine stationsseitige CP-Erkennung mit Schutz-/Überwachungsfunktion.

Beim konduktiven Aufladen von Elektrokraftfahrzeugen mit elektrischer Energie mittels einer Ladevorrichtung, wobei bei einem derartigen konduktiven Aufladen das Elektrokraftfahrzeug physisch elektrisch mit der Ladevorrichtung verbunden ist, wird üblicherweise zwischen Elektrokraftfahrzeug und Ladevorrichtung eine elektrische Kommunikationsverbindung ausgebildet. Über diese elektrische Kommunikationsverbindung kommunizieren das Elektrokraftfahrzeug und die Ladevorrichtung mittels eines pulsweitenmodellierten elektrischen Kommunikationssignals, wobei eine positive Amplitude des Signals den Status des Fahrzeugs und die Pulsweite einen vorgegebenen und mittels der Ladevorrichtung bereitgestellten elektrischen Ladestrom darstellen.

Ein typischer Standard der elektrischen Kommunikationsverbindung bzw. des pulsweitenmodellierten Kommunikationssignals ist in der Norm IEC61851-1 angegeben. Demnach müssen insbesondere ein negativer und ein positiver Spannungspegel sowie eine gewisse Flankensteilheit, d.h. insbesondere Anstiegs- und Abfallzeiten der Flanken des Signals bzw. der Pulse des Signals, eingehalten werden. Ladevorrichtungen werden üblicherweise mittels einer Ladekabeleinrichtung mit dem Elektrokraftfahrzeug elektrisch kommunizierend verbunden, wenn es elektrisch aufgeladen werden soll. In zahlreichen Versuchen hat man festgestellt, dass derartige Ladekabeleinrichtungen nicht nur aufgrund ihres elektrischen Kabelwiderstands negativ auf das gesendete Kommunikationssignal einwirken, sondern auch aufgrund ihrer elektrischen Kabelkapazität und elektrischen Kabelinduktivität. Dabei können insbesondere durch die Kabelkapazität der Ladekabeleinrichtung die für eine gewisse Flankensteilheit verantwortlichen hohen Frequenzen des Kommunikationssignals durch die Ladekabeleinrichtung in der Art eines Tiefpassfilters gedämpft oder gefiltert werden, insbesondere solange die besagte Kabelkapazität der Ladekabeleinrichtung durch die Ladevorrichtung aufgeladen wird. In Abhängigkeit der Größe der Kabelkapazität der Ladekabeleinrichtung kann die Flankensteilheit des Kommunikationssignals so stark abnehmen, dass es außerhalb des genormten Sollbereichs liegt und ein Elektrokraftfahrzeug, welches die Norm IEC61851-1 streng einhält, im an die Ladevorrichtung elektrisch angeschlossenen Zustand nicht mit elektrischer Energie aufgeladen werden kann.

Bekanntermaßen ist der elektrische Kabelwiderstand, die elektrische Kabelkapazität und die Kabelinduktivität der Ladekabeleinrichtung abhängig von dessen Länge, so dass die geschilderten, nachteiligen Effekte bei relativ langen Ladekabeleinrichtungen, welche sich wegen ihrer einfachen und bequemen Handhabbarkeit beim Endnutzer immer stärkerer Beliebtheit erfreuen, stärker ausfallen, als bei relativ kurzen Ladekabeleinrichtungen.

Die Aufgabe der Erfindung liegt darin, eine verbesserte oder zumindest eine andere Ausführungsform einer Ladevorrichtung bereitzustellen.

Bei der vorliegenden Erfindung wird diese Aufgabe insbesondere durch den Gegenstand des unabhängigen Anspruchs 1 gelöst. Vorteilhafte Ausführungsformen sind Gegenstand der abhängigen Ansprüche und der Beschreibung.

Der Grundgedanke der Erfindung liegt darin, die negativen Einflüsse der Kabelkapazität des Verbindungskabels auf das Kommunikationssignal dadurch zu verhindern oder zumindest deutlich zu verringern, dass ein elektrisches Widerstandsbauelement dem Verbindungskabel abgewandt in den ersten Steckerleitungsabschnitt eines Verbindungssteckers, der mit einem Pilotkontakt verbunden ist, eingegliedert ist.

Hierzu schlägt die Erfindung eine Ladevorrichtung für ein Elektrokraftfahrzeug vor, mittels der eine elektrische Kommunikationsverbindung zwischen der Ladevorrichtung und dem mittels der Ladevorrichtung mit elektrischer Energie aufladbaren Elektrokraftfahrzeug ausbildbar oder ausgebildet ist. Die Ladevorrichtung ist mit einer Ladestation, die eine Kommunikationsschaltungsanordnung aufweist, die einen elektrischen Leitungspfad aufweist, in welchem ein elektrischer Oszillator zum Erzeugen eines pulsweitenmodulierten, elektrischen Kommunikationssignals angeordnet ist, sowie mit einer ein Verbindungskabel und einen Verbindungsstecker aufweisenden Ladekabeleinrichtung zum elektrisch kommunizierenden Verbinden der Ladestation mit dem Elektrokraftfahrzeug ausgerüstet. Dabei hat das Verbindungskabel einen elektrischen Kabelleitungspfad, der mit dem Leitungspfad der Kommunikationsschaltungsanordnung elektrisch kommunizierend verbunden oder verbindbar ist. Der am Verbindungskabel angeordnete Verbindungsstecker weist einen elektrischen Steckerleitungspfad auf, der mit dem Kabelleitungspfad des Verbindungskabels elektrisch kommunizierend verbunden ist. Wesentlich ist, dass die Ladevorrichtung ein elektrisches Widerstandsbauelement aufweist, das dem Verbindungskabel abgewandt in den ersten Steckerleitungsabschnitt des Steckerleitungspfads des Verbindungssteckers elektrisch kommunizierend eingegliedert ist, wobei der erste Steckerleitungsabschnitt mit einem am Verbindungsstecker angeordneten Pilotkontakt und der zweite Steckerleitungsabschnitt mit einem am Verbindungsstecker angeordneten Massekontakt elektrisch kommunizierend verbunden ist.

Mit anderen Worten ist das elektrische Widerstandsbauelement abseits der Ladestation und nach dem Verbindungskabel der Ladekabeleinrichtung im Verbindungsstecker platziert. Dadurch ist der durch das elektrische Widerstandsbauelement realisierte elektrische Widerstand insbesondere dem Verbindungskabel bzw. dem Kabelleitungspfad des Verbindungskabels elektrisch nachgeschaltet. Das hat den vorteilhaften Effekt, dass eine Kabelkapazität des Verbindungskabels bzw. des Kabelleitungspfads dem elektrischen Widerstand des elektrischen Widerstandsbauelements elektrisch vorgeschaltet ist, wodurch die besagte Kabelkapazität vergleichsweise zügig, d.h. in relativ kurzen Zeitspannen, aufladbar ist. Dies begründet sich darin, dass die benötigte Zeit zum Aufladen der besagten Kabelkapazität von der Größe der Kabelkapazität einerseits und der Größe eines vor die Kabelkapazität geschalteten elektrischen Widerstands, beispielsweise ein vorgeschaltetes elektrisches Widerstandsbauelement, andererseits abhängig ist. Ein zügiges Aufladen der Kabelkapazität des Verbindungskabels bzw. des Kabelleitungspfads bringt den Vorteil mit sich, dass das Kommunikationssignal, das bei einer zwischen Ladevorrichtung und Elektrokraftfahrzeug etablierten Kommunikationsverbindung über die Ladekabeleinrichtung gesendet wird, weniger stark als seither oder überhaupt nicht gedämpft oder gefiltert wird. Hierdurch können typische Signalstandards, beispielsweise gemäß der Norm IEC61851-1, bemerkenswert gut eingehalten werden, insbesondere kann eine Abnahme der Flankensteilheit des Kommunikationssignals verhindert oder zumindest deutlich verringert werden.

Beispielsweise kann auch vorgesehen sein, dass das Verbindungskabel eine isolierende Umhüllung aufweist, welche den besagten elektrischen Kabelleitungspfad außen einfasst. Weiterhin kann beispielsweise vorgesehen sein, dass der Verbindungsstecker eine isolierende Steckerumhüllung aufweist, welche den besagten Verbindungsstecker außen einfasst.

Zweckmäßig ist, wenn die Ladekabeleinrichtung, insbesondere entgegengesetzt zum Verbindungsstecker, eine Verbindungsschnittstelle zur Ladestation besitzt, beispielsweise einen Ladestationsverbindungsstecker, anhand der die Ladekabeleinrichtung elektrisch und mechanisch an der Ladestation angeordnet ist.

Weiter zweckmäßigerweise ist vorgesehen, dass die Ladekabeleinrichtung anhand ihres Verbindungssteckers am Elektrokraftfahrzeug mechanisch und elektrisch angeschlossen oder anschließbar ist, d.h. insbesondere an demselben angeordnet und damit elektrisch kommunizierend verbunden ist.

Erfindungsgemäß ist vorgesehen, dass der besagte Steckerleitungspfad zwei separate elektrische Steckerleitungsabschnitte aufweist, wobei der erste Steckerleitungsabschnitt mit einem am Verbindungsstecker angeordneten Pilotkontakt elektrisch kommunizierenden verbunden ist und der zweite Steckerleitungsabschnitt mit einem am Verbindungsstecker angeordneten Massekontakt elektrisch kommunizierenden verbunden ist. Der Pilotkontakt und der Massekontakt sind an das Elektrokraftfahrzeug zur Ausbildung der elektrischen Kommunikationsverbindung elektrisch kommunizierend angeschlossen oder anschließbar. Weiterhin ist das besagte elektrische Widerstandsbauelement in den ersten Steckerleitungsabschnitt des Steckerleitungspfads elektrisch kommunizierend eingegliedert. Dadurch ist das elektrische Widerstandsbauelement im ersten Steckerleitungsabschnitt des Steckerleitungspfads elektrisch kommunizierend angeordnet, wodurch eine ideale Position für das elektrische Widerstandsbauelement angegeben ist.

Hierbei kann zweckmäßigerweise vorgesehen sein, dass der erste Steckerleitungsabschnitt, insbesondere ausschließlich, anhand dem elektrischen Widerstandsbauelement mit dem Pilotkontakt elektrisch kommunizierend verbunden ist. Dadurch ist eine vorteilhafte Ausführungsform der Ladevorrichtung angegeben, bei der das elektrische Widerstandsbauelement eine elektrische Verbindung mit dem Pilotkontakt realisiert.

Zweckmäßigerweise kann vorgesehen sein, dass das besagte elektrische Widerstandsbauelement im oder am Verbindungsstecker angeordnet ist. Beispielsweise kann das besagte elektrische Widerstandsbauelement integral mit dem Verbindungsstecker ausgeführt sein und/oder im Inneren desselben angeordnet sein und/oder dabei mit dem ersten Steckerleitungsabschnitt und dem Pilotkontakt elektrisch kommunizierend verbunden sein. Zweckmäßigerweise sind auch der Pilotkontakt und der Massekontakt integral mit dem Verbindungsstecker ausgeführt und/oder im Inneren desselben angeordnet. Dadurch sind das besagte elektrische Widerstandsbauelement, der Pilotkontakt und der Massekontakt in einem Bauteil ausgeführt und beispielsweise vor Umwelteinflüssen geschützt. Weiterhin ist dadurch das elektrische Widerstandsbauelement, wenn die Ladekabeleinrichtung am Elektrokraftfahrzeug angeschlossen ist, möglichst nahe am Elektrokraftfahrzeug und nach der Kabelkapazität des Verbindungskabels bzw. des Kabelleitungspfads des Verbindungskabels platziert.

Weiter zweckmäßigerweise kann vorgesehen sein, dass ein durch das elektrische Widerstandsbauelement realisierter elektrischer Widerstand 1.000Ω aufweist. Alternativ kann vorgesehen sein, dass ein durch das elektrische Widerstandsbauelement realisierter elektrischer Widerstand minimal 100Ω aufweist oder dass ein durch das elektrische Widerstandsbauelement realisierter elektrischer Widerstand minimal 100Ω und maximal 1.000Ω aufweist. Weiterhin kann vorgesehen sein, dass ein durch das elektrische Widerstandsbauelement realisierter elektrischer Widerstand 500Ω oder 1.000Ω aufweist. Dadurch sind bevorzugte elektrische Widerstände für das besagte elektrische Widerstandsbauelement angegeben.

Weiter zweckmäßigerweise kann vorgesehen sein, dass der Kabelleitungspfad des Verbindungskabels einen ersten elektrischen Kabelleitungsabschnitt aufweist, der mit einem ersten elektrischen Steckerleitungsabschnitt des Steckerleitungspfads elektrisch kommunizierend verbunden ist, sowie einen zweiten elektrischen Kabelleitungsabschnitt aufweist, der mit einem zweiten elektrischen Steckerleitungsabschnitt des Steckerleitungspfads elektrisch kommunizierend verbunden ist. Dabei kann der besagte elektrische Oszillator den Leitungspfad der Kommunikationsschaltungsanordnung in einen ersten elektrischen Leitungsabschnitt, der mit dem ersten Kabelleitungsabschnitt des Kabelleitungspfads elektrisch kommunizierend verbunden ist, und einen zweiten elektrischen Leitungsabschnitt, der mit dem zweiten Kabelleitungsabschnitt des Kabelleitungspfads elektrisch kommunizierend verbunden ist, unterteilen. Hierbei kann die Ladevorrichtung neben dem besagten elektrischen Widerstandsbauelement zumindest ein weiteres elektrisches Widerstandsbauelement aufweisen, das elektrisch kommunizierend in den ersten Leitungsabschnitt des Leitungspfads eingegliedert ist. Diese Ausführungsform hat einen ähnlichen positiven Effekt auf das Kommunikationssignal wie die vorhergehenden Ausführungsformen, da sie einen durch das Verbindungskabel bzw. den Kabelleitungspfad fließenden Strom weniger begrenzt.

Zweckmäßigerweise ist vorgesehen, dass der Kabelleitungspfad des Verbindungskabels und das zumindest eine weitere elektrische Widerstandsbauelement eine Frequenzfiltereinrichtung bilden. Dabei realisiert das besagte zumindest eine weitere elektrische Widerstandsbauelement ein Frequenzfilter-Widerstandsbauelement und Kabelleitungspfad des Verbindungskabels oder dessen erster elektrischer Kabelleitungsabschnitt und dessen zweiter elektrischer Kabelleitungsabschnitt aufgrund ihrer inhärenten Kabelkapazität ein Frequenzfilter-Kapazitätsbauelement. Die Frequenzfiltereinrichtung besitzt zweckmäßigerweise ein Tiefpassverhalten. Zweckmäßigerweise wird das Frequenzfilter-Kapazitätsbauelement anhand des Frequenzfilter-Widerstandsbauelements aufgeladen. Dabei kann das Frequenzfilter-Widerstandsbauelement die Grenzfrequenz der Frequenzfiltereinrichtung beeinflussen.

Weiter zweckmäßigerweise kann vorgesehen sein, dass ein durch das elektrische Widerstandsbauelement realisierter elektrischer Widerstand und ein durch das zumindest eine weitere elektrische Widerstandsbauelement realisierter elektrischer Widerstand in Summe einen Widerstand von 1.000Ω realisieren. Dadurch ist sozusagen ein bevorzugter elektrischer Gesamtwiderstand für das besagte elektrische Widerstandsbauelement und das zumindest eine weitere elektrische Widerstandsbauelement angegeben.

Um mittels der Ladevorrichtung einen Fahrzeugzustand des Elektrokraftfahrzeugs erfassen zu können, kann weiter zweckmäßigerweise vorgesehen sein, dass die Ladevorrichtung eine mit dem Steckerleitungspfad elektrisch kommunizierend verbundene Messleitung aufweist. Anhand dieser kann beispielsweise eine, insbesondere positive, Amplitude des Kommunikationssignals am elektrischen Widerstandsbauelement gemessen werden. Exemplarisch kann es sich um eine elektrische Spannungsamplitude handeln. Dabei kann der elektrische Steckerleitungspfad zwei elektrische Steckerleitungsabschnitte aufweisen, wobei der erste Steckerleitungsabschnitt mit einem am Verbindungsstecker angeordneten Pilotkontakt elektrisch kommunizierenden verbunden ist und der zweite Steckerleitungsabschnitt mit einem am Verbindungsstecker angeordneten Massekontakt elektrisch kommunizierenden verbunden ist, wobei Pilotkontakt und Massekontakt an das Elektrokraftfahrzeug zur Ausbildung der elektrischen Kommunikationsverbindung elektrisch kommunizierend angeschlossen oder anschließbar sind.

Dabei ist das elektrische Widerstandsbauelement in der vorliegend beanspruchten Ausführungsform in den ersten Steckerleitungsabschnitt elektrisch kommunizierend eingegliedert, wobei die Messleitung dann mit einem zwischen dem elektrischen Widerstandsbauelement und dem Pilotkontakt begrenzten oder gebildeten elektrischen Messabschnitt des ersten Steckerleitungsabschnitts elektrisch kommunizierend verbunden ist. Weiterhin kann vorgesehen sein, dass die besagte Messleitung an die Ladestation zurückgeführt ist. Dies kann, um eine bequem handhabbare Ladekabeleinrichtung bereitstellen zu können, beispielsweise dadurch realisiert sein, dass die besagte Messleitung zumindest abschnittsweise durch den Verbindungsstecker und/oder durch das Verbindungskabel der Ladekabeleinrichtung hindurchgeführt ist. Dadurch kann eine elektrische Spannung am besagten elektrischen Widerstandsbauelement gemessen werden, auf deren Basis ein Fahrzeugzustand des Elektrokraftfahrzeugs ableitbar ist.

Um mittels der Ladevorrichtung einen Fahrzeugzustand des Elektrokraftfahrzeugs erfassen zu können, beispielsweise eine positive Amplitude des Kommunikationssignals, kann weiter zweckmäßigerweise vorgesehen sein, dass der besagte Kabelleitungspfad des Verbindungskabels einen ersten elektrischen Kabelleitungsabschnitt aufweist, der mit einem ersten elektrischen Steckerleitungsabschnitt des Steckerleitungspfads elektrisch kommunizierend verbunden ist, sowie einen zweiten elektrischen Kabelleitungsabschnitt aufweist, der mit einem zweiten elektrischen Steckerleitungsabschnitt des Steckerleitungspfads elektrisch kommunizierend verbunden ist. Dabei kann der elektrische Oszillator den Leitungspfad der Kommunikationsschaltungsanordnung in einen ersten elektrischen Leitungsabschnitt, der mit dem ersten Kabelleitungsabschnitt des Kabelleitungspfads elektrisch kommunizierend verbunden ist, und einen zweiten elektrischen Leitungsabschnitt, der mit dem zweiten Kabelleitungsabschnitt des Kabelleitungspfads elektrisch kommunizierend verbunden ist, unterteilen. Weiterhin kann vorgesehen sein, dass die Ladevorrichtung ein als elektrisches Messwiderstandsbauelement bezeichnetes elektrisches Widerstandsbauelement aufweist, das in den ersten Leitungsabschnitt des Leitungspfads elektrisch kommunizierend eingegliedert ist. Das elektrische Messwiderstandsbauelement unterteilt dadurch den ersten Leitungsabschnitt in einen dem elektrischen Oszillator zugewandten elektrischen Abschnitt sowie in einen dem elektrischen Oszillator abgewandten elektrischen Messabschnitt. Zweckmäßigerweise ist die Ladevorrichtung mit einer Messleitung ausgerüstet, anhand der eine Messung einer elektrischen Spannung am elektrischen Messwiderstandsbauelement durchführbar ist, wobei die Messleitung mit dem bezüglich dem elektrischen Oszillator abgewandten Messabschnitt elektrisch kommunizierend verbunden ist. Zweckmäßigerweise besitzt oder realisiert das besagte elektrischen Messwiderstandsbauelement einen relativ kleinen elektrischen Widerstand, beispielsweise im Bereich von 1Ω bis 100Ω. Eine am elektrischen Messwiderstandsbauelement abfallende elektrische Spannung kann gemessen werden, wobei auf deren Basis ein Fahrzeugzustand des Elektrokraftfahrzeugs ableitbar ist. Zweckmäßigerweise entspricht der elektrische Widerstand des elektrischen Messwiderstandsbauelements dem elektrischen Widerstand bzw. der Impedanz des Kabelleitungspfads des Verbindungskabels oder durch den ersten elektrischen Kabelleitungsabschnitt des Kabelleitungspfads und den zweiten elektrischen Kabelleitungsabschnitt des Kabelleitungspfads Kabels, wodurch beispielsweise Reflexionen verhindert werden können.

Um mittels der Ladevorrichtung einen Fahrzeugzustand des Elektrokraftfahrzeugs erfassen zu können, beispielsweise eine Amplitude des Kommunikationssignals, kann weiter zweckmäßigerweise vorgesehen sein, dass der Kabelleitungspfad des Verbindungskabels einen ersten elektrischen Kabelleitungsabschnitt aufweist, der mit einem ersten elektrischen Steckerleitungsabschnitt des Steckerleitungspfads elektrisch kommunizierend verbunden ist, sowie einen zweiten elektrischen Kabelleitungsabschnitt aufweist, der mit einem zweiten elektrischen Steckerleitungsabschnitt des Steckerleitungspfads elektrisch kommunizierend verbunden ist. Dabei unterteilt der elektrische Oszillator den Leitungspfad der Kommunikationsschaltungsanordnung in einen ersten elektrischen Leitungsabschnitt, der mit dem ersten Kabelleitungsabschnitt des Kabelleitungspfads elektrisch kommunizierend verbunden ist, und in einen zweiten elektrischen Leitungsabschnitt, der mit dem zweiten Kabelleitungsabschnitt des Kabelleitungspfads elektrisch kommunizierend verbunden ist. Die Ladevorrichtung weist dabei zweckmäßigerweise einen elektrischen Stromsensor auf, der zur Messung einer Amplitude des Kommunikationssignals eingerichtet und in den ersten Leitungsabschnitt des Leitungspfads elektrisch kommunizierend eingegliedert ist. Die Messung einer Amplitude des Kommunikationssignals kann beispielsweise im Rahmen einer Strommessung erfolgen. Anhand des elektrischen Stromsensors, der wie erwähnt beispielsweise durch einen Hall-Sensor oder dergleichen geeignete Sensoren realisiert sein kann, kann die Amplitude in Form einer Spannungsamplitude des Kommunikationssignals, direkt gemessen werden. Dabei ändert sich der Betrag des Stroms des Kommunikationssignals zweckmäßigerweise in Abhängigkeit der Amplitude des Kommunikationssignals. Anhand der ermittelten Amplitude kann ein Fahrzeugzustand des Elektrokraftfahrzeugs abgeleitet werden. Der Fahrzeugzustand umfasst beispielsweise einer oder mehrerer der nachfolgenden Zustände: Nicht Eingesteckt, Eingesteckt, Ladebereit, Ladebereit mit Lüftung, Fehler.

Zusammenfassend bleibt festzuhalten: Die vorliegende Erfindung betrifft vorzugsweise eine Ladevorrichtung für ein Elektrokraftfahrzeug mit einer Ladestation, die eine Kommunikationsschaltungsanordnung aufweist, die einen elektrischen Leitungspfad aufweist, in welchem ein elektrischer Oszillator zum Erzeugen eines pulsweitenmodulierten elektrischen Kommunikationssignals angeordnet ist, und mit einer ein Verbindungskabel und einen Verbindungsstecker aufweisenden Ladekabeleinrichtung zum elektrisch kommunizierenden Verbinden der Ladestation mit dem Elektrokraftfahrzeug. Das Verbindungskabel weist einen elektrischen Kabelleitungspfad auf, der mit dem Leitungspfad elektrisch kommunizierend verbunden ist, wobei der am Verbindungskabel angeordnete Verbindungsstecker einen elektrischen Steckerleitungspfad aufweist, der mit dem Kabelleitungspfad elektrisch kommunizierend verbunden ist. Wesentlich ist, dass die Ladevorrichtung ein elektrisches Widerstandsbauelement aufweist, das dem Verbindungskabel abgewandt in den ersten Steckerleitungsabschnitt des Steckerleitungspfads des Verbindungssteckers elektrisch kommunizierend eingegliedert ist, wobei der erste Steckerleitungsabschnitt mit einem am Verbindungsstecker angeordneten Pilotkontakt und der zweite Steckerleitungsabschnitt mit einem am Verbindungsstecker angeordneten Massekontakt elektrisch kommunizierend verbunden **ist.**

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine stark vereinfachte Darstellung der Ladevorrichtung gemäß einer ersten Ausführungsform,
- Fig. 2: eine stark vereinfachte Darstellung der Ladevorrichtung gemäß einer weiteren Ausführungsform,
- Fig. 3: eine stark vereinfachte Darstellung der Ladevorrichtung gemäß einer weiteren Ausführungsform,
- Fig. 4: eine stark vereinfachte Darstellung der Ladevorrichtung gemäß einer weiteren Ausführungsform und zuletzt
- Fig. 5: eine stark vereinfachte Darstellung der Ladevorrichtung gemäß einer weiteren Ausführungsform.

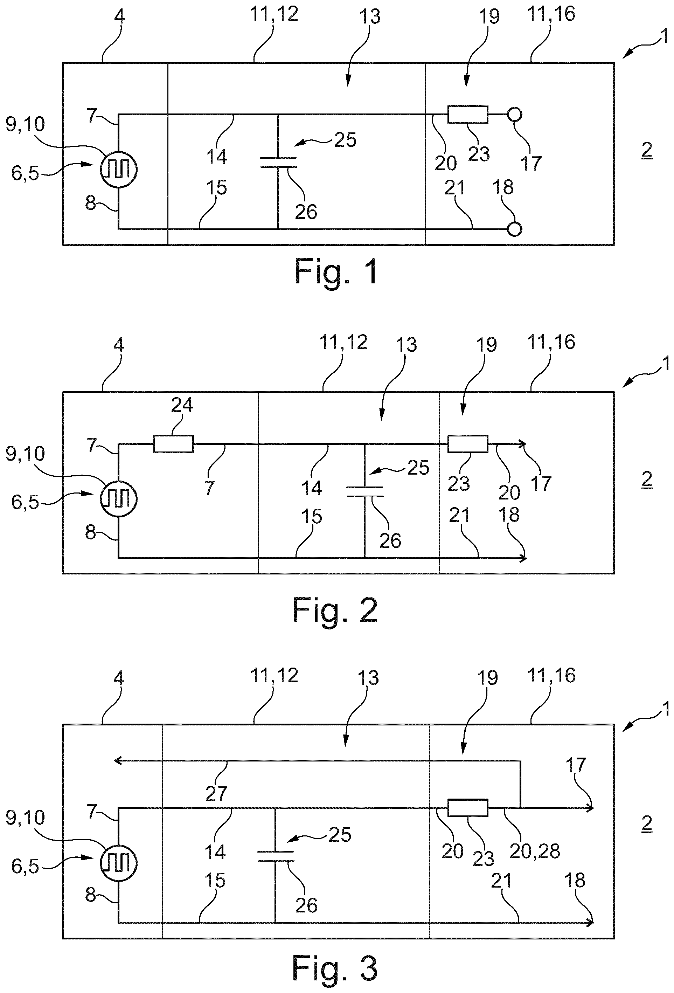

Die Fig. 1 bis 5 zeigen bevorzugte Ausführungsformen einer Ladevorrichtung für ein Elektrokraftfahrzeug 2, die durchgängig mit der Bezugsziffer 1 bezeichnet ist. Mittels der Ladevorrichtung 1 kann eine elektrische Kommunikationsverbindung zwischen der Ladevorrichtung 1 und dem mittels der Ladevorrichtung 1 mit elektrischer Energie aufladbaren Elektrokraftfahrzeug 2 ausbildbar oder ausgebildet sein. Der Einfachheit halber sind in den Ausführungsformen gemäß der Fig. 1 bis 5 funktionsgleiche oder funktionsähnliche Komponenten mit den gleichen Bezugszeichen versehen. Eine erneute Beschreibung funktionsgleicher oder funktions-ähnlicher Komponenten wird nicht vorgenommen, um Wiederholungen zu vermeiden. Stattdessen ist der Fokus auf die die Ausführungsformen unterscheidenden Merkmale gelegt.

Die Fig. 1 zeigt eine symbolische und stark vereinfachte Ladevorrichtung 1 für ein Elektrokraftfahrzeug 2 gemäß einer ersten Ausführungsform, die eine durch ein Kästchen angedeutete Ladestation 4 und eine daran mechanisch und elektrisch angeordnete Ladekabeleinrichtung 11 aufweist.

Die Ladestation 4 besitzt eine elektrische Kommunikationsschaltungsanordnung 5, die zur Ausbildung der Kommunikationsverbindung eingerichtet ist. Sie verfügt zu diesem Zweck über einen durch Linien angedeuteten elektrischen Leitungspfad 6, in welchem ein durch ein entsprechendes Kreissymbol angedeuteter elektrischer Oszillator 9 angeordnet ist, der zum Erzeugen eines pulsweitenmodulierten elektrischen Kommunikationssignals 10 ausgebildet ist, welches bei einer zwischen Ladevorrichtung 1 und dem Elektrokraftfahrzeug 2 etablierten Kommunikationsverbindung über die Ladekabeleinrichtung 11 gesendet ist. Der elektrische Oszillator 9 unterteilt den Leitungspfad 6 der Kommunikationsschaltungsanordnung 5 in einen ersten elektrischen Leitungsabschnitt 7 und in einen zweiten elektrischen Leitungsabschnitt 8.

Die Ladekabeleinrichtung 11 weist ein durch ein Kästchen angedeutetes Verbindungskabel 12 und einen daran angeordneten, zum elektrisch kommunizierenden Verbinden der Ladestation 4 mit dem Elektrokraftfahrzeug 2 eingerichteten, ebenfalls durch ein Kästchen angedeuteten Verbindungsstecker 16 auf. Das Verbindungskabel 12 besitzt seinerseits einen mit dem Leitungspfad 6 der Kommunikationsschaltungsanordnung 5 elektrisch kommunizierend verbundenen, elektrischen Kabelleitungspfad 13, der exemplarisch einen ersten elektrischen Kabelleitungsabschnitt 14, der mit dem ersten Leitungsabschnitt 7 des Leitungspfads 6 elektrisch kommunizierend verbunden ist, und einen zweiten elektrischen Kabelleitungsabschnitt 15 aufweist, der mit dem zweiten Leitungsabschnitt 8 des Leitungspfads 6 elektrisch kommunizierend verbunden ist. Der Kabelleitungspfad 13 kann in einer nicht illustrierten Umhüllung des Verbindungskabels 12 eingebettet und dadurch gegenüber der Umgebung isoliert sein.

Der am Verbindungskabel 12 angeordnete Verbindungsstecker 16 weist einen elektrischen Steckerleitungspfad 19 auf, der zwei separate elektrische Steckerleitungsabschnitte 20, 21 besitzt. Dabei ist der erste Steckerleitungsabschnitt 20 mit einem am Verbindungsstecker 16 angeordneten Pilotkontakt 17 sowie mit dem ersten Kabelleitungsabschnitt 14 des Kabelleitungspfads 13 elektrisch kommunizierenden verbunden. Der zweite Steckerleitungsabschnitt 21 ist mit einem am Verbindungsstecker 16 angeordneten Massekontakt 18 und mit dem zweiten Kabelleitungsabschnitt 15 des Kabelleitungspfads 13 elektrisch kommunizierenden verbunden. Pilotkontakt 17 sowie Massekontakt 18 sind an das Elektrokraftfahrzeug 2 zur Ausbildung der elektrischen Kommunikationsverbindung elektrisch kommunizierend angeschlossen oder anschließbar. Weiterhin besitzt die Ladevorrichtung 1 ein elektrisches Widerstandsbauelement 23, welches exemplarisch bezüglich dem Verbindungskabel 12 abgewandt in den ersten Steckerleitungsabschnitt 20 des Steckerleitungspfads 19 des Verbindungssteckers 16 elektrisch kommunizierend eingegliedert und beispielsweise integral in einem nicht illustrierten Gehäuse des Verbindungssteckers 16 oder einer ebenfalls nicht illustrierten Steckerumhüllung des Verbindungssteckers 16 angeordnet ist.

Dadurch ist der durch das elektrische Widerstandsbauelement 23 realisierte elektrische Widerstand dem Verbindungskabel 12 bzw. dem Kabelleitungspfad 13 des Verbindungskabels 12 elektrisch nachgeschaltet. Das hat insbesondere den vorteilhaften Effekt, dass eine inhärente Kabelkapazität 26 des Verbindungskabels 12 bzw. des Kabelleitungspfads 13 des Verbindungskabels 12, die in den Fig. 1 bis 5 rein symbolisch und rein zu plakativen Zwecken (Ersatzschaltbild) eingetragen und in einem ebenso rein symbolisch und rein zu plakativen Zwecken eingetragenen, den ersten Kabelleitungsabschnitt 14 mit dem zweiten Kabelleitungsabschnitt 15 verbindenden elektrischen Parallel-Leitungspfad 25 angeordnet ist, dem elektrischen Widerstand des elektrischen Widerstandsbauelements 23 elektrisch vorgeschaltet ist. Durch diese Anordnung ist die besagte Kabelkapazität 26 vergleichsweise zügig aufladbar, wodurch das Kommunikationssignal 10 nicht oder nur in geringem Maße gefiltert oder gedämpft wird, so dass typische Signalstandards für das Kommunikationssignal 10, beispielsweise gemäß der Norm IEC61851-1, bemerkenswert gut eingehalten werden können. Beispielsweise realisiert das elektrische Widerstandsbauelement 23 einen elektrischen Widerstand von 1.000Ω.

Die in Fig. 2 illustrierte Ausführungsform der Ladevorrichtung 1 unterscheidet sich gegenüber der in Fig. 1 gezeigten Ausführungsform der Ladevorrichtung 1 dadurch, dass die Ladevorrichtung 1 neben dem besagten elektrischen Widerstandsbauelement 23 genau ein weiteres elektrisches Widerstandsbauelement 24 aufweist, das elektrisch kommunizierend in den ersten Leitungsabschnitt 7 des Leitungspfads 6 eingegliedert ist. Beispielsweise realisieren das elektrische Widerstandsbauelement 23 und das weitere elektrische Widerstandsbauelement 24 jeweils einen elektrischen Widerstand von 500Ω. Das elektrische Widerstandsbauelement 23 und das weitere elektrische Widerstandsbauelement 24 können zweckmäßigerweise aus mehreren einzelnen parallelen und/oder in Reihe geschalteten Einzelwiderständen zusammengesetzt sein. Dies ist beispielsweise möglich, wenn z.B. ein gewünschter Widerstand nicht durch ein einzelnes Widerstandsbauelement abgebildet werden kann. Das elektrische Widerstandsbauelement 23 und das weitere elektrische Widerstandsbauelement 24 realisieren einen elektrischen Gesamtwiderstand von 1.000Ω.

Die in Fig. 3 illustrierte Ausführungsform der Ladevorrichtung 1 unterscheidet sich gegenüber der in Fig. 1 gezeigten Ausführungsform der Ladevorrichtung 1 durch, eine in Fig. 3 mit einer einfachen Linie angedeutete Messleitung 27, die mit dem Steckerleitungspfad 19 elektrisch kommunizierend verbunden ist, so dass anhand der Messleitung 27 und beispielsweise einer nicht illustrierten Messeinrichtung eine Messung einer Amplitude des Kommunikationssignals 10 am elektrischen Widerstandsbauelement 23, beispielsweise eine elektrischen Spannung am elektrischen Widerstandsbauelement 23, durchführbar ist. Rein exemplarisch ist vorgesehen, dass das in den ersten Steckerleitungsabschnitt 20 elektrisch kommunizierend eingegliederte elektrische Widerstandsbauelement 23 den Steckerleitungsabschnitt 20 in einen nicht näher bezeichneten elektrischen Abschnitt des Steckerleitungsabschnitts 20 sowie einen elektrischen Messabschnitt 28, der zwischen dem elektrischen Widerstandsbauelement 23 und dem Pilotkontakt 17 begrenzten oder gebildet ist, unterteilt. Die Messleitung 27 ist dabei mit dem Messabschnitt 28 elektrisch kommunizierend verbunden und beispielsweise zumindest abschnittsweise durch den Verbindungsstecker 16 und vollständig durch das Verbindungskabel 12 der Ladekabeleinrichtung 11 hindurch zur Ladestation 4 zurückgeführt. Anhand der gemessenen Amplitude des Kommunikationssignals 10 kann ein Fahrzeugzustand des Elektrokraftfahrzeugs 2 erfasst werden.

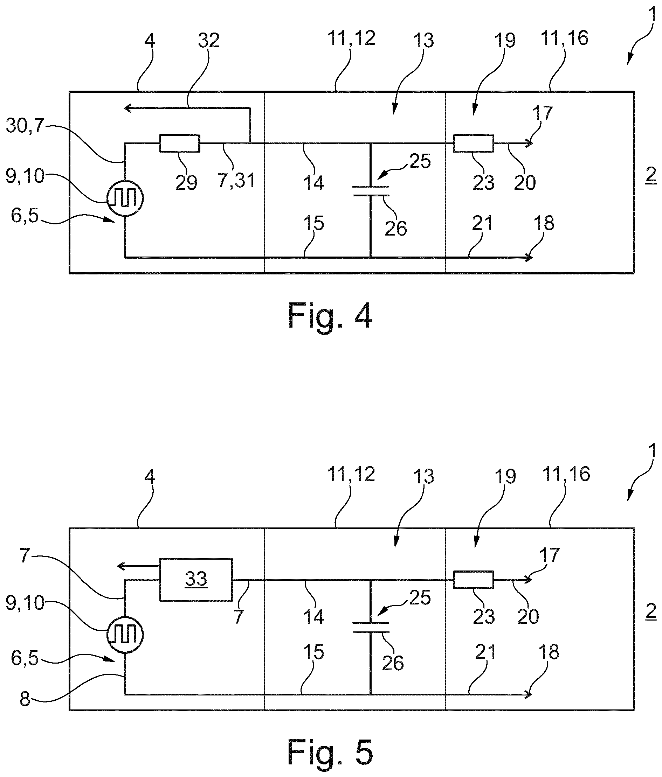

Die in Fig. 4 illustrierte Ausführungsform der Ladevorrichtung 1 unterscheidet sich gegenüber der in Fig. 1 gezeigten Ausführungsform der Ladevorrichtung 1 dadurch, dass die Ladevorrichtung 1 ein als elektrisches Messwiderstandsbauelement 29 bezeichnetes elektrisches Widerstandsbauelement aufweist, das in den ersten Leitungsabschnitt 7 des Leitungspfads 6 elektrisch kommunizierend eingegliedert ist. Das elektrische Messwiderstandsbauelement 29 realisiert dabei einen relativ kleinen elektrischen Widerstand, beispielsweise im Bereich von 1Ω bis 100Ω, und unterteilt den ersten Leitungsabschnitt 7 in einen dem elektrischen Oszillator 9 zugewandten elektrischen Abschnitt 30 sowie in einen dem elektrischen Oszillator 9 abgewandten elektrischen Messabschnitt 31. Die Ladevorrichtung 1 gemäß dieser Ausführungsform besitzt eine Messleitung 32, anhand der und beispielsweise einer nicht illustrierten Messeinrichtung eine Messung einer Amplitude des Kommunikationssignals 10 am elektrischen Messwiderstandsbauelement 29, beispielsweise eine elektrische Spannung am elektrischen Messwiderstandsbauelement 29, durchführbar ist. Die Messleitung 32 ist zu diesem Zweck mit dem bezüglich dem elektrischen Oszillator 9 abgewandten Messabschnitt 31 elektrisch kommunizierend verbunden und rein exemplarisch intern in der Ladestation 4 integriert. Dadurch kann vorliegend eine Amplitude des Kommunikationssignals 10 am elektrischen Messwiderstandsbauelement 29, beispielsweise eine am elektrischen Messwiderstandsbauelement 29 abfallende elektrische Spannung, mittels der Messleitung 32 und beispielsweise einer hier nicht illustrierten Messeinrichtung gemessen werden, wobei auf deren Basis ein Fahrzeugzustand des Elektrokraftfahrzeugs 2 ableitbar ist.

Die in Fig. 5 illustrierte Ausführungsform der Ladevorrichtung 1 unterscheidet sich gegenüber der in Fig. 1 gezeigten Ausführungsform der Ladevorrichtung 1 durch einen zur Messung einer Amplitude des Kommunikationssignals 10 eingerichteten elektrischen Stromsensor 33, der zum Beispiel durch einen Hall-Sensor realisiert sein kann und in den ersten Leitungsabschnitt 7 des Leitungspfads 6 elektrisch kommunizierend eingegliedert ist. Dadurch kann eine Amplitude des Kommunikationssignals 10 am Leitungsabschnitt 7, beispielsweise der Betrag des Stroms des Kommunikationssignals 10 durch den Leitungsabschnitt 7, erfasst werden, anhand der einen Fahrzeugzustand des Elektrokraftfahrzeugs 2 ableitbar ist.

## Patentansprüche

1. Ladevorrichtung (1) für ein Elektrokraftfahrzeug (2),
- mittels der eine elektrische Kommunikationsverbindung zwischen der Ladevorrichtung (1) und dem mittels der Ladevorrichtung (1) mit elektrischer Energie aufladbaren Elektrokraftfahrzeug (2) ausbildbar oder ausgebildet ist,
- mit einer Ladestation (4), die eine Kommunikationsschaltungsanordnung (5) aufweist, die einen elektrischen Leitungspfad (6) aufweist, in welchem ein elektrischer Oszillator (9) zum Erzeugen eines pulsweitenmodulierten elektrischen Kommunikationssignals (10) angeordnet ist,
- mit einer ein Verbindungskabel (12) und einen Verbindungsstecker (16) aufweisenden Ladekabeleinrichtung (11) zum elektrisch kommunizierenden Verbinden der Ladestation (4) mit dem Elektrokraftfahrzeug (2),
- wobei das Verbindungskabel (12) einen elektrischen Kabelleitungspfad (13) aufweist, der mit dem Leitungspfad (6) elektrisch kommunizierend verbunden oder verbindbar ist,
- wobei der am Verbindungskabel (12) angeordnete Verbindungsstecker (16) einen elektrischen Steckerleitungspfad (19) aufweist, der mit dem Kabelleitungspfad (13) elektrisch kommunizierend verbunden ist,
- wobei die Ladevorrichtung (1) ein elektrisches Widerstandsbauelement (23) aufweist, welches dem Verbindungskabel (12) abgewandt in den Steckerleitungspfad (19) des Verbindungssteckers (16) elektrisch kommunizierend eingegliedert ist,
- wobei der Steckerleitungspfad (19) zwei elektrische Steckerleitungsabschnitte (20, 21) aufweist, wobei der erste Steckerleitungsabschnitt (20) mit einem am Verbindungsstecker (16) angeordneten Pilotkontakt (17) elektrisch kommunizierenden verbunden ist und der zweite Steckerleitungsabschnitt (21) mit einem am Verbindungsstecker (16) angeordneten Massekontakt (18) elektrisch kommunizierenden verbunden ist, welche an das Elektrokraftfahrzeug (2) zur Ausbildung der elektrischen Kommunikationsverbindung elektrisch kommunizierend angeschlossen oder anschließbar sind,
**dadurch gekennzeichnet, dass**
- das elektrische Widerstandsbauelement (23) in den ersten Steckerleitungsabschnitt (20) elektrisch kommunizierend eingegliedert ist.

2. Ladevorrichtung (1) nach Anspruch 1,
**dadurch gekennzeichnet, dass**
der erste Steckerleitungsabschnitt (20) anhand dem elektrischen Widerstandsbauelement (23) mit dem Pilotkontakt (17) elektrisch kommunizierend verbunden ist.

3. Ladevorrichtung (1) nach Anspruch 1 oder 2,
**dadurch gekennzeichnet, dass**
das elektrische Widerstandsbauelement (23) im oder am Verbindungsstecker (16) angeordnet ist.

4. Ladevorrichtung (1) nach einem der vorhergehenden Ansprüche,
**dadurch gekennzeichnet, dass**
ein durch das elektrische Widerstandsbauelement (23) realisierter elektrischer Widerstand 1.000Ω ist.

5. Ladevorrichtung (1) nach einem der vorhergehenden Ansprüche,
**dadurch gekennzeichnet, dass**
- der Kabelleitungspfad (13) des Verbindungskabels (12) aufweist: einen ersten elektrischen Kabelleitungsabschnitt (14), der mit einem ersten elektrischen Steckerleitungsabschnitt (20) des Steckerleitungspfads (19) elektrisch kommunizierend verbunden ist, sowie einen zweiten elektrischen Kabelleitungsabschnitt (15), der mit einem zweiten elektrischen Steckerleitungsabschnitt (21) des Steckerleitungspfads (19) elektrisch kommunizierend verbunden ist,
- wobei der elektrische Oszillator (9) den Leitungspfad (6) der Kommunikationsschaltungsanordnung (5) in einen ersten elektrischen Leitungsabschnitt (7), der mit dem ersten Kabelleitungsabschnitt (14) des Kabelleitungspfads (13) elektrisch kommunizierend verbunden ist, und einen zweiten elektrischen Leitungsabschnitt (8), der mit dem zweiten Kabelleitungsabschnitt (15) des Kabelleitungspfads (13) elektrisch kommunizierend verbunden ist, unterteilt,
- wobei neben dem besagten elektrischen Widerstandsbauelement (23) zumindest ein weiteres elektrisches Widerstandsbauelement (24) vorgesehen ist, das elektrisch kommunizierend in den ersten Leitungsabschnitt (7) des Leitungspfads (6) eingegliedert ist und/oder wobei das zumindest eine weitere elektrische Widerstandsbauelement (24) zusammen mit dem Kabelleitungspfad (13) eine Frequenzfiltereinrichtung bildet.

6. Ladevorrichtung (1) nach Anspruch 5,
**dadurch gekennzeichnet, dass**
- ein durch das besagte elektrische Widerstandsbauelement (23) realisierter elektrischer Widerstand und ein durch das zumindest eine weitere elektrische Widerstandsbauelement (24) realisierter elektrischer Widerstand zusammengenommen einen elektrischen Gesamtwiderstand von 1.000Ω realisieren.

7. Ladevorrichtung (1) nach einem der vorhergehenden Ansprüche,
**gekennzeichnet dadurch**
- eine mit dem Steckerleitungspfad (19) elektrisch kommunizierend verbundene Messleitung (27), anhand der eine Messung einer Amplitude des Kommunikationssignals (10) am elektrischen Widerstandsbauelement (23) oder einer elektrischen Spannung am elektrischen Widerstandsbauelement (23) durchführbar ist,
- wobei der elektrische Steckerleitungspfad (19) zwei elektrische Steckerleitungsabschnitte (20, 21) aufweist, wobei der erste Steckerleitungsabschnitt (20) mit einem am Verbindungsstecker (16) angeordneten Pilotkontakt (17) elektrisch kommunizierenden verbunden ist und der zweite Steckerleitungsabschnitt (21) mit einem am Verbindungsstecker (16) angeordneten Massekontakt (18) elektrisch kommunizierenden verbunden ist, wobei Pilotkontakt (17) und Massekontakt (18) an das Elektrokraftfahrzeug (2) zur Ausbildung der elektrischen Kommunikationsverbindung elektrisch kommunizierend angeschlossen oder anschließbar sind,
- wobei das elektrische Widerstandsbauelement (23) in den ersten Steckerleitungsabschnitt (20) oder in den zweiten Steckerleitungsabschnitt (21) elektrisch kommunizierend eingegliedert ist,
- wobei die Messleitung (27) mit einem zwischen dem elektrischen Widerstandsbauelement (23) und dem Pilotkontakt (17) begrenzten elektrischen Messabschnitt (28) des ersten Steckerleitungsabschnitts (20) elektrisch kommunizierend verbunden ist, und/oder
- wobei die Messleitung (27) an die Ladestation (4) zurückgeführt ist, beispielsweise zumindest abschnittsweise durch den Verbindungsstecker (16) und/oder durch das Verbindungskabel (12) der Ladekabeleinrichtung (11) hindurch.

8. Ladevorrichtung (1) nach einem der vorhergehenden Ansprüche,
**dadurch gekennzeichnet, dass**
- der Kabelleitungspfad (13) des Verbindungskabels (12) aufweist: einen ersten elektrischen Kabelleitungsabschnitt (14), der mit einem ersten elektrischen Steckerleitungsabschnitt (20) des Steckerleitungspfads (19) elektrisch kommunizierend verbunden ist, sowie einen zweiten elektrischen Kabelleitungsabschnitt (15), der mit einem zweiten elektrischen Steckerleitungsabschnitt (21) des Steckerleitungspfads (19) elektrisch kommunizierend verbunden ist,
- wobei der elektrische Oszillator (9) den Leitungspfad (6) der Kommunikationsschaltungsanordnung (5) in einen ersten elektrischen Leitungsabschnitt (7), der mit dem ersten Kabelleitungsabschnitt (14) des Kabelleitungspfads (13) elektrisch kommunizierend verbunden ist, und einen zweiten elektrischen Leitungsabschnitt (8), der mit dem zweiten Kabelleitungsabschnitt (15) des Kabelleitungspfads (13) elektrisch kommunizierend verbunden ist, unterteilt,
- wobei die Ladevorrichtung (1) ein elektrisches Messwiderstandsbauelement (29) aufweist, das in den ersten Leitungsabschnitt (7) des Leitungspfads (6) elektrisch kommunizierend eingegliedert ist,
- wobei das elektrische Messwiderstandsbauelement (29) den ersten Leitungsabschnitt (7) in einen dem elektrischen Oszillator (9) zugewandten elektrischen Abschnitt (30) sowie in einen dem elektrischen Oszillator (9) abgewandten elektrischen Messabschnitt (31) unterteilt,
- wobei die Ladevorrichtung (1) eine Messleitung (32) aufweist, anhand der eine Messung einer Amplitude des Kommunikationssignals (10) am elektrischen Messwiderstandsbauelement (29) oder einer elektrischen Spannung am elektrischen Messwiderstandsbauelement (29) durchführbar ist, die mit dem bezüglich dem elektrischen Oszillator (9) abgewandten Messabschnitt (31) elektrisch kommunizierend verbunden ist.

9. Ladevorrichtung (1) nach einem der vorhergehenden Ansprüche,
**dadurch gekennzeichnet, dass**
- der Kabelleitungspfad (13) des Verbindungskabels (12) aufweist: einen ersten elektrischen Kabelleitungsabschnitt (14), der mit einem ersten elektrischen Steckerleitungsabschnitt (20) des Steckerleitungspfads (19) elektrisch kommunizierend verbunden ist, sowie einen zweiten elektrischen Kabelleitungsabschnitt (15), der mit einem zweiten elektrischen Steckerleitungsabschnitt (21) des Steckerleitungspfads (19) elektrisch kommunizierend verbunden ist,
- wobei der elektrische Oszillator (9) den Leitungspfad (6) der Kommunikationsschaltungsanordnung (5) in einen ersten elektrischen Leitungsabschnitt (7), der mit dem ersten Kabelleitungsabschnitt (14) des Kabelleitungspfads (13) elektrisch kommunizierend verbunden ist, und einen zweiten elektrischen Leitungsabschnitt (8), der mit dem zweiten Kabelleitungsabschnitt (15) des Kabelleitungspfads (13) elektrisch kommunizierend verbunden ist, unterteilt,
- wobei die Ladevorrichtung (1) einen elektrischen Stromsensor (33) aufweist, zum Beispiel ein Hall-Sensor, der zur Messung einer Amplitude des Kommunikationssignals (10) oder des Stroms im Rahmen einer Strommessung zur Messung des Betrags eines Stroms des Kommunikationssignals (10) eingerichtet ist,
- wobei der elektrische Stromsensor (33) in den ersten Leitungsabschnitt (7) des Leitungspfads (6) elektrisch kommunizierend eingegliedert ist.

## Claims

1. Charging device (1) for an electric motor vehicle (2),
- by means of which device an electrical communication connection between the charging device (1) and the electric motor vehicle (2), which can be charged with electrical energy by means of the charging device (1), can be formed or is formed,
- having a charging station (4) which has a communication circuit arrangement (5) that has an electrical line path (6) in which an electrical oscillator (9) is arranged for generating a pulse width-modulated electrical communication signal (10),
- having a charging cable apparatus (11), which has a connecting cable (12) and a connector (16), for connecting the charging station (4) for electrical communication to the electric motor vehicle (2),
- the connecting cable (12) having an electrical cable line path (13) which is or can be connected for electrical communication to the line path (6),
- the connector (16) arranged on the connecting cable (12) having an electrical connector line path (19) which is connected for electrical communication to the cable line path (13),
- the charging device (1) having an electrical resistor element (23) which is integrated for electrical communication into the connector line path (19) of the connector (16) so that it faces away from the connecting cable (12),
- the connector line path (19) having two electrical connector line portions (20, 21), the first connector line portion (20) being connected for electrical communication to a pilot contact (17) arranged on the connector (16) and the second connector line portion (21) being connected for electrical communication to a ground contact (18) arranged on the connector (16), which contacts are or can be linked for electrical communication to the electric motor vehicle (2) in order to form the electrical communication connection,
**characterized in that**
- the electrical resistor element (23) is integrated for electrical communication into the first connector line portion (20).

2. Charging device (1) according to claim 1,
**characterized in that**
the first connector line portion (20) is connected for electrical communication to the pilot contact (17) via the electrical resistor element (23).

3. Charging device (1) according to claim 1 or 2,
**characterized in that**
the electrical resistor element (23) is arranged in or on the connector (16).

4. Charging device (1) according to any of the preceding claims,
**characterized in that**
an electrical resistance of 1000 Ω is produced by the electrical resistor element (23).

5. Charging device (1) according to any of the preceding claims,
**characterized in that**
- the cable line path (13) of the connecting cable (12) has: a first electrical cable line portion (14) which is connected for electrical communication to a first electrical connector line portion (20) of the connector line path (19), and a second electrical cable line portion (15) which is connected for electrical communication to a second electrical connector line portion (21) of the connector line path (19),
- the electrical oscillator (9) dividing the line path (6) of the communication circuit arrangement (5) into a first electrical line portion (7) which is connected for electrical communication to the first cable line portion (14) of the cable line path (13) and a second electrical line portion (8) which is connected for electrical communication to the second cable line portion (15) of the cable line path (13),
- wherein, in addition to said electrical resistor element (23), at least one further electrical resistor element (24) is provided, which is integrated for electrical communication into the first line portion (7) of the line path (6), and/or the at least one further electrical resistor element (24) forming a frequency filter apparatus together with the cable line path (13).

6. Charging device (1) according to claim 5,
**characterized in that**
- an electrical resistance produced by said electrical resistor element (23) and an electrical resistance produced by the at least one further electrical resistor element (24) together produce a total electrical resistance of 1,000 Ω.

7. Charging device (1) according to any of the preceding claims,
**characterized by**
- a measuring line (27) which is connected for electrical communication to the connector line path (19) and by means of which a measurement of an amplitude of the communication signal (10) at the electrical resistor element (23) or of an electrical voltage at the electrical resistor element (23) can be carried out,
- wherein the electrical connector line path (19) comprises two electrical connector line portions (20, 21), the first connector line portion (20) being connected for electrical communication to a pilot contact (17) arranged on the connector (16) and the second connector line portion (21) being connected for electrical communication to a ground contact (18) arranged on the connector (16), wherein the pilot contact (17) and the ground contact (18) are connected or can be connected to the electric motor vehicle (2) to form the electrical communication connection,
- wherein the electrical resistor element (23) is integrated for electrical communication into the first connector line portion (20) or into the second connector line portion (21),
- wherein the measuring line (27) is connected for electrical communication to an electrical measuring portion (28) of the first connector line portion (20), said electrical measuring portion being delimited between the electrical resistor element (23) and the pilot contact (17), and/or
- wherein the measuring line (27) is routed back to the charging station (4), for example at least in sections through the connector (16) and/or through the connecting cable (12) of the charging cable apparatus (11).

8. Charging device (1) according to any of the preceding claims,
**characterized in that**
- the cable line path (13) of the connecting cable (12) has: a first electrical cable line portion (14) which is connected for electrical communication to a first electrical connector line portion (20) of the connector line path (19), and a second electrical cable line portion (15) which is connected for electrical communication to a second electrical connector line portion (21) of the connector line path (19),
- the electrical oscillator (9) dividing the line path (6) of the communication circuit arrangement (5) into a first electrical line portion (7) which is connected for electrical communication to the first cable line portion (14) of the cable line path (13) and a second electrical line portion (8) which is connected for electrical communication to the second cable line portion (15) of the cable line path (13),
- the charging device (1) having an electrical measuring resistor element (29) which is integrated for electrical communication into the first line portion (7) of the line path (6),
- the electrical measuring resistor element (29) dividing the first line portion (7) into an electrical portion (30) which faces the electrical oscillator (9) and into an electrical measuring portion (31) which faces away from the electrical oscillator (9),
- the charging device (1) having a measuring line (32) by means of which a measurement of an amplitude of the communication signal (10) at the electrical measuring resistor element (29) or of an electrical voltage at the electrical measuring resistor element (29) can be carried out and which is connected for electrical communication to the measuring portion (31) which faces away from the electrical oscillator (9).

9. Charging device (1) according to any of the preceding claims,
**characterized in that**
- the cable line path (13) of the connecting cable (12) has: a first electrical cable line portion (14) which is connected for electrical communication to a first electrical connector line portion (20) of the connector line path (19), and a second electrical cable line portion (15) which is connected for electrical communication to a second electrical connector line portion (21) of the connector line path (19),
- the electrical oscillator (9) dividing the line path (6) of the communication circuit arrangement (5) into a first electrical line portion (7) which is connected for electrical communication to the first cable line portion (14) of the cable line path (13) and a second electrical line portion (8) which is connected for electrical communication to the second cable line portion (15) of the cable line path (13),
- the charging device (1) having an electrical current sensor (33), for example a Hall sensor, which is designed to measure an amplitude of the communication signal (10) or of the current as part of a current measurement in order to measure the magnitude of a current of the communication signal (10),
- the electrical current sensor (33) being integrated for electrical communication into the first line portion (7) of the line path (6).

## Revendications

1. Dispositif de recharge (1) pour un véhicule automobile électrique (2),
- au moyen duquel une connexion de communication électrique entre le dispositif de recharge (1) et le véhicule automobile électrique (2) pouvant être rechargé en énergie électrique à l'aide du dispositif de recharge (1) peut être établie ou est établie,
- comportant une station de recharge (4) qui présente un agencement formant circuit de communication (5) qui présente un chemin de conduction (6) électrique dans lequel est disposé un oscillateur électrique (9) permettant de générer un signal de communication (10) électrique modulé en largeur d'impulsion,
- comportant un appareil formant câble de recharge (11) présentant un câble de connexion (12) et une fiche de connexion (16) et permettant la connexion de manière à être en communication électrique de la station de recharge (4) au véhicule automobile électrique (2),
- dans lequel le câble de connexion (12) présente un chemin de conduction de câble (13) électrique qui est connecté ou peut être connecté au chemin de conduction (6) de manière à être en communication électrique,
- dans lequel la fiche de connexion (16) disposée au niveau du câble de connexion (12) présente un chemin de conduction de fiche (19) électrique qui est connecté au chemin de conduction de câble (13) de manière à être en communication électrique,
- dans lequel le dispositif de recharge (1) présente un composant formant résistance électrique (23) qui est intégré de manière à être en communication électrique à l'opposé du câble de connexion (12) dans le chemin de conduction de fiche (19) de la fiche de connexion (16),
- dans lequel le chemin de conduction de fiche (19) présente deux sections de conduction de fiche (20, 21) électriques, dans lequel la première section de conduction de fiche (20) est connectée de manière à être en communication électrique à un contact pilote (17) disposé sur la fiche de connexion (16) et la seconde section de conduction de fiche (21) est connectée de manière à être en communication électrique à un contact de masse (18) disposé sur la fiche de connexion (16), lesquels sont raccordés ou peuvent être raccordés de manière à être en communication électrique au véhicule automobile électrique (2) pour l'établissement de la connexion de communication électrique,
**caractérisé en ce que**
- le composant formant résistance électrique (23) est intégré dans la première section de conduction de fiche (20) de manière à être en communication électrique.

2. Dispositif de recharge (1) selon la revendication 1,
**caractérisé en ce que**
la première section de conduction de fiche (20) est connectée au contact pilote (17) de manière à être en communication électrique au moyen du composant formant résistance électrique (23).

3. Dispositif de recharge (1) selon la revendication 1 ou 2,
**caractérisé en ce que**
le composant formant résistance électrique (23) est disposé dans ou sur la fiche de connexion (16).

4. Dispositif de recharge (1) selon l'une des revendications précédentes,
**caractérisé en ce que**
une résistance électrique de 1 000 Ω est réalisée par le composant formant résistance électrique (23).

5. Dispositif de recharge (1) selon l'une des revendications précédentes,
**caractérisé en ce que**
- le chemin de conduction de câble (13) du câble de connexion (12) présente : une première section de conduction de câble (14) électrique connectée de manière à être en communication électrique à une première section de conduction de fiche (20) électrique du chemin de conduction de fiche (19), ainsi qu'une seconde section de conduction de câble (15) électrique connectée de manière à être en communication électrique à une seconde section de conduction de fiche (21) électrique du chemin de conduction de fiche (19),
- dans lequel l'oscillateur électrique (9) divise le chemin de conduction (6) de l'agencement formant circuit de communication (5) en une première section de conduction (7) électrique connectée de manière à être en communication électrique à la première section de conduction de câble (14) du chemin de conduction de câble (13), et en une seconde section de conduction (8) électrique connectée de manière à être en communication électrique à la seconde section de conduction de câble (15) du chemin de conduction de câble (13),
- dans lequel, outre ledit composant formant résistance électrique (23), au moins un autre composant formant résistance électrique (24) est prévu, lequel est intégré de manière à être en communication électrique dans la première section de conduction (7) du chemin de conduction (6) et/ou dans lequel l'au moins un autre composant formant résistance électrique (24) forme, conjointement avec le chemin de conduction de câble (13), un appareil de filtrage de fréquence.

6. Dispositif de recharge (1) selon la revendication 5,
**caractérisé en ce que**
- une résistance électrique réalisée par ledit composant formant résistance électrique (23) et une résistance électrique réalisée par l'au moins un autre composant formant résistance électrique (24) forment ensemble une résistance électrique totale de 1 000 Ω.

7. Dispositif de recharge (1) selon l'une des revendications précédentes,
**caractérisé en ce que**
- une ligne de mesure (27) connectée de manière à être en communication électrique au chemin de conduction de fiche (19), au moyen de laquelle une mesure d'une amplitude du signal de communication (10) au niveau du composant formant résistance électrique (23) ou d'une tension électrique au niveau du composant formant résistance électrique (23) peut être effectuée,
- dans lequel le chemin de conduction de fiche (19) électrique présente deux sections de conduction de fiche (20, 21) électriques, dans lequel la première section de conduction de fiche (20) est connectée de manière à être en communication électrique à un contact pilote (17) disposé sur la fiche de connexion (16) et la seconde section de conduction de fiche (21) est connectée de manière à être en communication électrique à un contact de masse (18) disposé sur la fiche de connexion (16), dans lequel le contact pilote (17) et le contact de masse (18) sont raccordés ou peuvent être raccordés au véhicule électrique (2) de manière à être en communication électrique pour l'établissement de la connexion de communication électrique,
- dans lequel le composant formant résistance électrique (23) est intégré de manière à être en communication électrique dans la première section de conduction de fiche (20) ou dans la seconde section de conduction de fiche (21),
- dans lequel la ligne de mesure (27) est connectée de manière à être en communication électrique à une section de mesure (28) électrique de la première section de conduction de fiche (20), laquelle section de mesure est délimitée entre le composant formant résistance électrique (23) et le contact pilote (17), et/ou
- dans lequel la ligne de mesure (27) est ramenée vers la station de recharge (4), par exemple au moins dans certaines sections, par l'intermédiaire de la fiche de connexion (16) et/ou du câble de connexion (12) de l'appareil formant câble de recharge (11).

8. Dispositif de recharge (1) selon l'une des revendications précédentes,
**caractérisé en ce que**
- le chemin de conduction de câble (13) du câble de connexion (12) présente : une première section de conduction de câble (14) électrique connectée de manière à être en communication électrique à une première section de conduction de fiche (20) électrique du chemin de conduction de fiche (19), ainsi qu'une seconde section de conduction de câble (15) électrique connectée de manière à être en communication électrique à une seconde section de conduction de fiche (21) électrique du chemin de conduction de fiche (19),
- dans lequel l'oscillateur électrique (9) divise le chemin de conduction (6) de l'agencement formant circuit de communication (5) en une première section de conduction (7) électrique connectée de manière à être en communication électrique à la première section de conduction de câble (14) du chemin de conduction de câble (13), et en une seconde section de conduction (8) électrique connectée de manière à être en communication électrique à la seconde section de conduction de câble (15) du chemin de conduction de câble (13),
- dans lequel le dispositif de recharge (1) présente un composant formant résistance de mesure électrique (29) qui est intégré de manière à être en communication électrique dans la première section de conduction (7) du chemin de conduction (6),
- dans lequel le composant formant résistance de mesure électrique (29) divise la première section de conduction (7) en une section (30) électrique tournée vers l'oscillateur électrique (9) et en une section de mesure (31) électrique opposée à l'oscillateur électrique (9),
- dans lequel le dispositif de recharge (1) présente une ligne de mesure (32) au moyen de laquelle une mesure d'une amplitude du signal de communication (10) au niveau du composant formant résistance de mesure électrique (29) ou d'une tension électrique au niveau du composant formant résistance de mesure électrique (29) peut être effectuée, laquelle ligne de mesure est connectée de manière à être en communication électrique à la section de mesure (31) opposée à l'oscillateur électrique (9).

9. Dispositif de recharge (1) selon l'une des revendications précédentes,
**caractérisé en ce que**
- le chemin de conduction de câble (13) du câble de connexion (12) présente : une première section de conduction de câble (14) électrique connectée de manière à être en communication électrique à une première section de conduction de fiche (20) électrique du chemin de conduction de fiche (19), ainsi qu'une seconde section de conduction de câble (15) électrique connectée de manière à être en communication électrique à une seconde section de conduction de fiche (21) électrique du chemin de conduction de fiche (19),
- dans lequel l'oscillateur électrique (9) divise le chemin de conduction (6) de l'agencement formant circuit de communication (5) en une première section de conduction (7) électrique connectée de manière à être en communication électrique à la première section de conduction de câble (14) du chemin de conduction de câble (13), et en une seconde section de conduction (8) électrique connectée de manière à être en communication électrique à la seconde section de conduction de câble (15) du chemin de conduction de câble (13),
- dans lequel le dispositif de recharge (1) présente un capteur de courant électrique (33), par exemple un capteur à effet Hall, qui est configuré pour mesurer une amplitude du signal de communication (10) ou du courant, dans le cadre d'une mesure de courant, pour mesurer la valeur d'un courant du signal de communication (10),
- dans lequel le capteur de courant électrique (33) est intégré de manière à être en communication électrique dans la première section de conduction (7) du chemin de conduction (6).
